# EUROPEAN PATENT SPECIFICATION

(11) **EP 1 002 461 B1**
(45) Date of publication and mention of the grant of the patent: **15.01.2003**
(21) Application number: 98650076.7
(22) Date of filing: 20.11.1998
(51) Int. Cl.: A01K 1/00, A01K 1/02

(54) **Animal housing**
Tierbehausung
Logement d'animaux

(43) Date of publication of application: 24.05.2000
(73) Proprietor: O'Gorman, Patrick Joseph, Portlaoise, County Laois (IE)
(72) Inventor: O'Gorman, Patrick Joseph, Portlaoise, County Laois (IE)
(74) Representative: Weldon, Michael James

(56) References cited:
- WO-A-95/28829
- FR-A- 2 759 247
- GB-A- 1 602 280

## Description

The invention relates to animal housing, particularly housing for farm animals such as pigs.

One of the problems facing farmers who propose to invest in animal husbandry is the capital investment which is required for appropriate animal housing. Very stringent requirements must be met for the environmental conditions under which the animals such as weaning pigs are kept. To achieve this level of environmental control, expensive installations meeting insulation, venting, exhaust, heating, and animal space requirements must be met. Also, it is important to ensure that slurry does not leak into the environment.

It is therefore an object of the invention to provide an animal house which meets these stringent criteria, in a simpler and less expensive manner than has been achieved to date.

According to the invention, there is provided a pre-fabricated animal house comprising:-
a base comprising ground-engaging feet, a waterproof slurry sump above the feet, and a slatted floor above the sump;
insulated walls extending from the base and a roof supported on the walls;
a controlled air inlet vent;
a controlled exhaust outlet; and
a controller connected to the vent and to the exhaust outlet and comprising means for controlling environmental conditions within the house.

By virtue of a combination of base with ground-engaging feet, the arrangement of the slurry sump and the walls extending from the base, and the environmental control features the invention achieves a self-contained unit which may be pre-fabricated. This allows very quick assembly on-site. Also. the components which are used have performance properties which may be accurately predicted and this enhances the ability to control the environment within the house.

Preferably, the base comprises a peripheral support which supports the walls and surrounds the sump. The base is a very important part of the house as it provides support for the walls and roof and it allows the house to be simply placed on the ground at a level site, and to be mobile. It also provides the sump which is of course essential for the house.

In one embodiment, the ground-engaging feet comprise a plurality of steel channels extending across the base and connected to the peripheral support. This arrangement provides excellent structural rigidity for the house. Preferably, the peripheral support comprises a vertical wall section surrounding the sump, a lower flange secured to the channels, an upper flange supporting the walls and an inner flange supporting the slatted floor.

In one embodiment, the sump comprises a waterproof film which is surrounded by insulation and the peripheral support and which is laid on a lower floor.

In one embodiment, the walls and the roof comprise interconnected panels comprising insulation and inner and outer skins.

Preferably, the air inlet vent is mounted in a wall and is controlled by a flap, the exhaust comprises an exhaust fan and an adjustable baffle, and the house further comprises a heater operatively connected to the controller.

In another embodiment, the controller comprises means for automatically opening the vent if a pre-set safety upper temperature is exceeded.

Ideally, the house further comprises partitions forming a plurality of animal pens and a passageway, and partitions adjoining the passageway are removable to form pen gates.

In another embodiment, the house further comprises a feeder for each pair of adjoining pens.

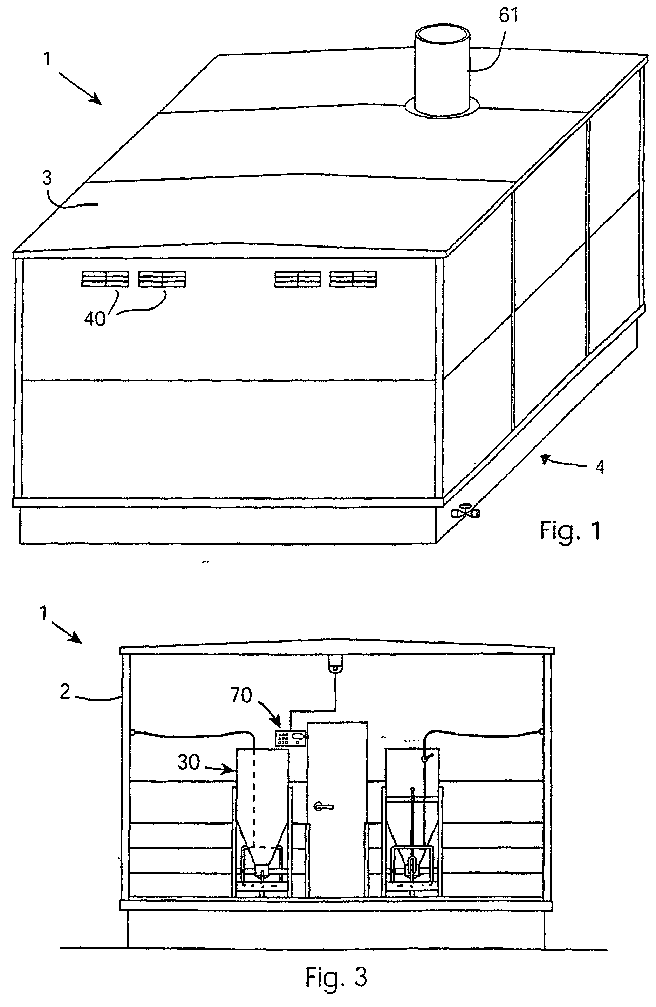

The invention will be more clearly understood from the following description of some embodiments thereof, given by way of example only with reference to the accompanying drawings in which:-
Fig. 1 is a perspective view from above of a pig weaning house of the invention;

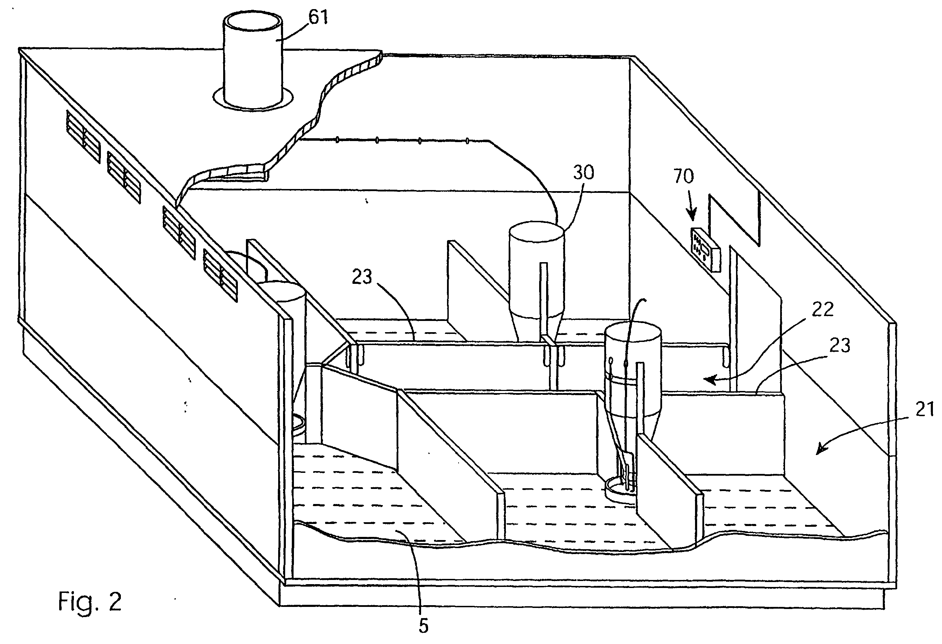

Fig. 2 is a diagrammatic partly cut-away view showing construction of the house;

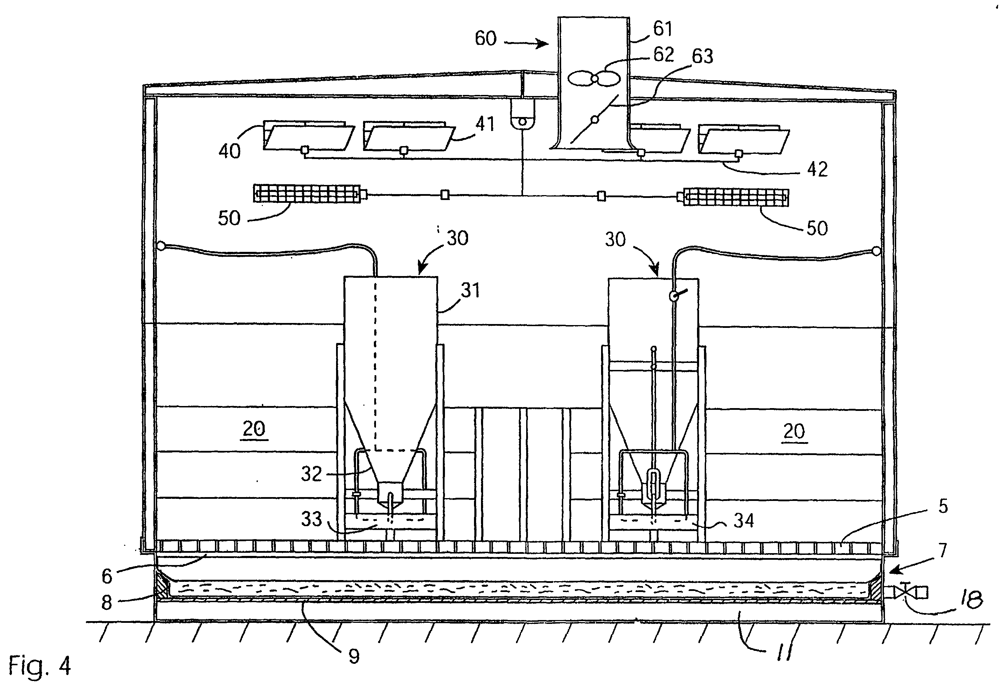

Fig. 3 is an elevational view showing one end of the house;
Fig. 4 is a cross-sectional elevational view of the house;
Fig. 5 is an exploded view of a base of the house; and
Fig. 6(a) to 6(g) are simplified plan views of alternative house configurations.

Referring to the drawings there is shown a pig weaning house 1. The house 1 comprises four walls 2 which have an inner stainless steel skin, a polyurethane form insulation (80mm thickness), and an outer plasticized steel skin. The house 1 also comprises an insulated roof 3 shaped on the outside for drainage of rain water and comprising inner and outer fibreglass skins between which is polyurethane insulating foam having a thickness in excess of 70mm.

The walls 2 and the roof 3 are supported on a base 4. The base 4 comprises modular PVC slats 5 mounted over a steel grid 6. The base 4 also comprises a sump 7 sealed by a 1.2mm butyl rubber waterproof film 8 extending downwardly from the walls 4 and extending across the base 4. A wood sheeting layer 9 underlies the butyl rubber 8. A wall of insulation 10 of 50mm thickness surrounds the sump 7.

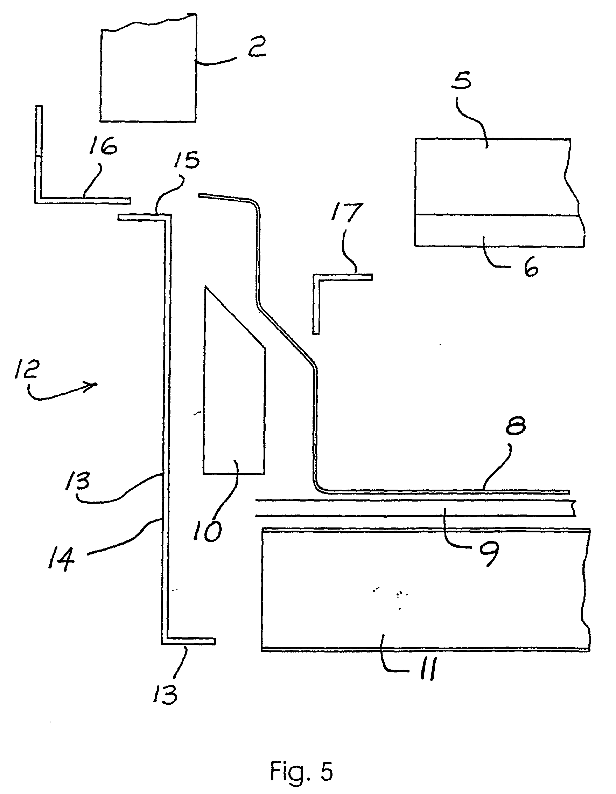

The base 4 also comprises a steel structure which provides a structural framework for the sump 7, the slatted floor 5, the walls 2, and ultimately the roof 3. The structure is best illustrated in Fig. 5. Multiple steel channels 11 extend across underneath the sheeting 9. These engage the ground and provide support for the floor. Lengths of angle steel are interconnected around the periphery of the base 4. These include a length 12 which has a lower flange 13 underlying the channels 11, a vertical wall section 14, and an upper flange 15 which supports the walls 2. The upper flange 15 is secured to a wall panel steel support angle 16. A stainless steel support angle 17 is secured to the vertical wall section 14 and it supports the slatted floor.

This structure provides considerable overall support for the house, allowing it to maintain its structural integrity effectively for indefinite periods. This is very important, both to ensure integrity of the walls and roof, and also of the sump 7.

A sump slurry valve 18 is mounted on one side of the sump 7 for suction of slurry into a tanker.

Within the house 4, PVC partitions 20 form a number of pens 21 and a passageway 22. Partitions which adjoin the passageway 22 are indicated by the numeral 23. They have a simple support arrangement whereby they may be lifted at either end and rotated out to open the pen and allow animals enter or exit the pen. This is a very simple and effective arrangement. The partitions may alternatively be of steel.

The house 1 also comprises a feeder 30 for each pair of adjoining pens. Each feeder 30 comprises a hopper 31 and a pair of dispensers 32, and each has an actuator 33 which is moved by the pigs snouts to cause feed to be dispensed into a pan 34. The feeders could alternatively be of the type comprising troughs which adjoin the passageways.

The house 1 has four inlet vents 40 mounted in a wall. Each vent 40 has a flap 41 controlled by a pulley system 42. Electrical heaters 50 are mounted beneath the vents 40.

The house 1 also comprises an exhaust vent 60 vertically mounted in the roof 3. The vent 60 comprises a duct 61 within which is mounted a fan 62, and a rotatable baffle 63. The exhaust may alternatively be mounted in a wall.

The vent pulley system 42, the heater 50, and the exhaust baffle 63 are all connected to a controller 70 mounted close to the door of the house. The controller provides computerised control of the environment within the house. It limits air speeds to below 0.4 metres/second and maintains temperature at a consistent level for the stage of the animals, particularly weaning pigs. The controller is programmed to automatically open all of the vents 40 if the temperature within the house 1 increases above a level in the range of 20°C to 30°C. The particular level depends on the stage of development of the animals. This provides an important safety feature to ensure that there is no risk of animals suffocating.

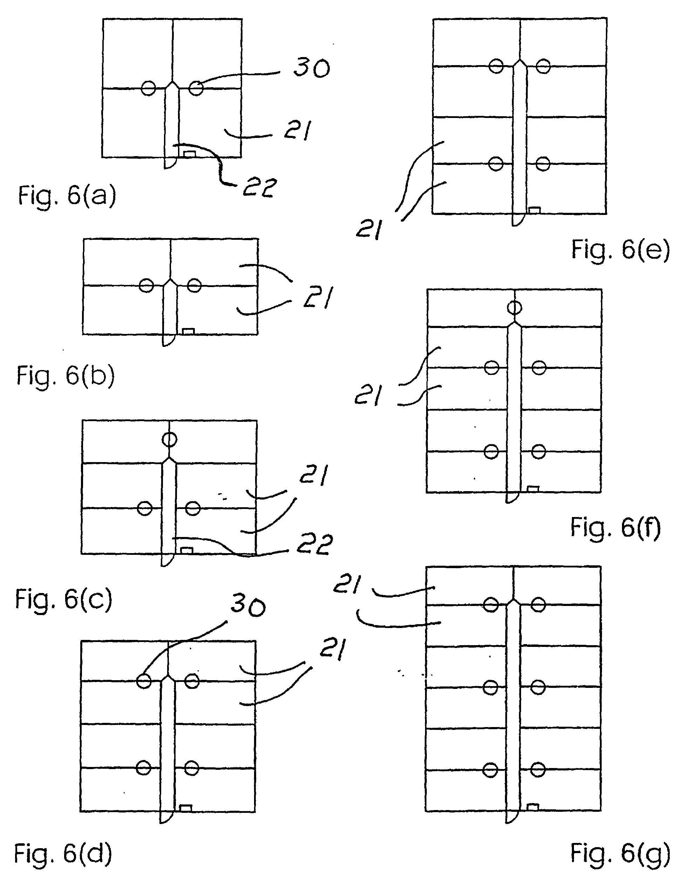

In operation, the major components of the house 1 such as the base slats, channels, and peripheral support are pre-fabricated. This allows very easy installation on-site on level ground. Once the base is in position, the walls and other parts may be easily assembled. Thus, the house may be very quickly built with very little manpower being required. Also, the construction provides a wide variety of options for the customer. For example, referring to Figs. 6(a) to 6(g), various modular configurations of pens and passageways are illustrated. This range of options is provided by virtue of the modular nature of the house.

Once the house is installed on-site, excellent environmental control is achieved by virtue of the fact that performance of the various materials such as the insulated walls may be accurately predicted by the controller 70. This is very important, particularly for younger animals such as weaning pigs. Also, because of the excellent insulation, heat generated by the animals causes relatively sharp rises in internal temperature. This in turn causes a high exhaust throughput, in turn causing a relatively high flowrate of inlet fresh air. This provides for improved health of the animals.

It will be appreciated that the construction of the house 1 allows it to be pre-fabricated and assembled on-site in a simple manner. It will also be appreciated that the materials of the house 1 are relatively inexpensive and the overall cost of the animal house would be considerably lower than one of conventional construction. The house may be assembled very quickly, thus dramatically reducing the lead time which is involved for construction. A still further advantage is the fact that the materials provide for very effective environmental control within the house as the performance of the various materials such as ventilation/exhaust parts may be predicted very accurately for control purposes.

The fact that the house is mobile leads to many advantages in practice. For example, a farmer who rents a farm may move the house from one site to another. Large farms which have varying animal housing requirements due to demand peaks and valleys may have houses installed and removed as required. Also, the house may be leased.

The invention is not limited to the embodiments described but may be varied in construction and detail within the scope of the claims.

## Claims

1. A pre-fabricated animal house (1) comprising:-
a base (4) comprising ground-engaging feet, a waterproof slurry sump (7) above the feet, and a slatted floor (5) above the sump;
insulated walls (2) extending from the base and a roof (3) supported on the walls;
a controlled air inlet vent (40);
a controlled exhaust outlet (60); and
a controller (70) connected to the vent and to the exhaust outlet and comprising means for controlling environmental conditions within the house.

2. A house as claimed in claim 1, wherein the base (4) comprises a peripheral support (12, 16, 17) which supports the walls and surrounds the sump.

3. A house as claimed in claim 2, wherein the ground-engaging feet comprise a plurality of steel channels (11) extending across the base and connected to the peripheral support.

4. A house as claimed in claim 3, wherein the peripheral support comprises a vertical wall section (14) surrounding the sump, a lower flange (13) secured to the channels (11), an upper flange (15) supporting the walls, and an inner flange (17) supporting the slatted floors (5).

5. A house as claimed in any preceding claim, wherein the sump (7) comprises a waterproof film (8) surrounded by insulation (10) and the peripheral support and laid on a lower floor (9).

6. A house as claimed in any preceding claim, wherein the walls and the roof comprise interconnected panels comprising insulation and inner and outer skins.

7. A house as claimed in any preceding claim, wherein the vent (40) is mounted in a wall and is controlled by a flap (4), the exhaust (60) comprises an exhaust fan (62) and an adjustable baffle (63), and the house further comprises a heater (50) operatively connected to the controller.

8. A house as claimed in claim 7, wherein the controller (70) comprises means for automatically opening the vent (40) if a pre-set safety temperature is exceeded.

9. A house as claimed in any preceding claim, wherein the house further comprises partitions (20) forming a plurality of animal pens (21) and a passageway (22), and partitions (23) adjoining the passageway are removable to form pen gates.

10. A house as claimed in any preceding claim, further comprising a feeder (30) for each pair of adjoining pens.

## Patentansprüche

1. Vorgefertigter Tierstall (1), umfassend:
einen Grundteil (4) mit in den Boden eingreifenden Füßen, einer wasserdichten Schlammsammelgrube (7) über den Füßen, und einem Lattenboden (5) über der Sammelgrube;
isolierte Wände (2), die sich von dem Grundteil erstrecken, und ein Dach (3), das auf den Wänden gehalten wird;
eine gesteuerte Lufteintrittslüftung (40);
einen gesteuerten Abzugsauslass (60); und
eine Steuerung (70), die mit der Lüftung und dem Abzugsauslass verbunden ist und Mittel zum Steuern von Umweltbedingungen innerhalb des Stalls aufweist.

2. Stall nach Anspruch 1, bei dem der Grundteil (4) einen Umfangsträger (12, 16; 17) aufweist, der die Wände hält und die Sammelgrube umschließt.

3. Stall nach Anspruch 2, bei dem die in den Boden eingreifenden Füße eine Mehrzahl von Stahlkanälen (1) aufweisen, die sich über den Grundteil erstrecken und mit dem Umfangsträger verbunden sind.

4. Stall nach Anspruch 3, bei dem der Umfangsträger einen vertikalen Wandabschnitt (14), der die Sammelgrube umschließt, einen unteren Flansch (13) befestigt an den Kanälen (11), einen oberen Flansch (15), der die Wände hält, und einen inneren Flansch (17) umfasst, der die Lattenböden (5) hält.

5. Stall nach einem vorhergehenden Anspruch, bei dem die Sammelgrube (7) eine wasserdichte Folie (8) aufweist, die durch Isolierung (10) und den Umfangsträger umschlossen ist, und auf einen unteren Boden (9) gelegt ist.

6. Stall nach einem vorhergehenden Anspruch, bei dem die Wände und das Dach miteinander verbundene Platten aufweisen, die Isolierung und Innen- und Außenüberzüge aufweisen.

7. Stall nach einem vorhergehenden Anspruch, bei dem die Lüftung (40) in einer Wand angebracht ist und durch eine Klappe (4) gesteuert wird, der Abzug (60) einen Abzugventilator (62) und ein einstellbares Prallblech (63) aufweist, und der Stall ferner eine Heizeinrichtung (50) aufweist, die arbeitsmäßig mit der Steuerung verbunden ist.

8. Stall nach Anspruch 7, bei dem die Steuerung (70) Mittel zum automatischen Öffnen der Lüftung (40) aufweist, wenn eine voreingestellte Sicherheitstemperatur überschritten wird.

9. Stall nach einem vorhergehenden Anspruch, bei dem der Stall ferner Unterteilungen (20) aufweist, die eine Mehrzahl von Tierboxen (21) und einen Durchgang (22) bilden, und Unterteilungen (23) angrenzend an den Durchgang zum Bilden von Boxentüren entfernbar sind.

10. Stall nach einem vorhergehenden Anspruch, der ferner eine Füttereinrichtung (30) für jedes Paar benachbarter Boxen aufweist.

## Revendications

1. Bâtiment préfabriqué pour animaux (1) comprenant :
une base (4) comportant des pieds s'engageant dans le sol, une fosse à lisier (7) imperméable à l'eau au-dessus des pieds, et un plancher à claire-voie (5) au-dessus de la fosse ;
des parois isolées (2) s'étendant depuis la base et un toit (3) qui est soutenu par les parois ;
un évent (40) à admission d'air contrôlée ;
un orifice (60) à évacuation contrôlée ; et
un contrôleur (70) qui est relié à l'évent et à l'orifice d'évacuation et qui comprend un moyen permettant de contrôler les conditions ambiantes à l'intérieur du bâtiment.

2. Bâtiment, selon la revendication 1, dans lequel la base (4) comprend un support périphérique (12, 16, 17) qui soutient les parois et entoure la fosse.

3. Bâtiment, selon la revendication 2, dans lequel les pieds s'engageant dans le sol comportent une pluralité de profilés en U (11) en acier, qui s'étendent en travers de la base et sont raccordés au support périphérique.

4. Bâtiment, selon la revendication 3, dans lequel le support périphérique comprend une section de paroi verticale (14) entourant la fosse, une bride inférieure (13) assujettie aux profilés (11), une bride supérieure (15) soutenant les parois, et une bride interne (17) soutenant les planchers à claire-voie (5).

5. Bâtiment, selon l'une quelconque des revendications précédentes, dans lequel la fosse (7) comprend une pellicule imperméable à l'eau (8) entourée de matière isolante (10) et du support périphérique et posée sur un plancher inférieur (9).

6. Bâtiment, selon l'une quelconque des revendications précédentes, dans lequel les parois et le toit sont composés de panneaux interconnectés comprenant une isolation ainsi que des revêtements internes et externes.

7. Bâtiment, selon l'une quelconque des revendications précédentes, dans lequel l'évent (40) est monté dans une paroi et est contrôlé par un volet (4), l'orifice d'évacuation (60) comprend un ventilateur extracteur (62) et un déflecteur réglable (63), et le bâtiment comporte en outre un réchauffeur (50) qui est relié de manière fonctionnelle au contrôleur.

8. Bâtiment, selon la revendication 7, dans lequel le contrôleur (70) comprend un moyen pour ouvrir automatiquement l'évent (40) dans le cas d'un dépassement d'une température de sécurité préréglée.

9. Bâtiment, selon l'une quelconque des revendications précédentes, dans lequel le bâtiment comprend en outre des cloisons (20) constituant une pluralité de parcs à animaux (21) et un passage (22), et des cloisons (23) contiguës au passage qui sont amovibles afin de former des portails de parc.

10. Bâtiment, selon l'une quelconque des revendications précédentes, comprenant en outre un dispositif d'affouragement (30) pour chaque paire de parcs contigus.
